# EUROPÄISCHE PATENTSCHRIFT

(11) **EP 0 918 798 B1**
(45) Veröffentlichungstag und Bekanntmachung des Hinweises auf die Patenterteilung: **15.11.2000**
(21) Anmeldenummer: 97935568.2
(22) Anmeldetag: 04.08.1997
(51) Int. Cl.: C08B 1/00, C08L 1/02, D01F 2/00

(54) **VERFAHREN ZUR HERSTELLUNG CELLULOSISCHER FORMKÖRPER**
METHOD FOR THE PRODUCTION OF CELLULOSIC SHAPED BODIES
PROCEDE DE PRODUCTION DE PIECES FACONNEES EN CELLULOSE

(30) Priorität: 14.08.1996 DE 19632668
(43) Veröffentlichungstag der Anmeldung: 02.06.1999
(73) Patentinhaber: Akzo Nobel N.V., 6824 BM Arnhem (NL)
(72) Erfinder: BUDGELL, Derek, D-63906 Erlenbach (DE); WACHSMANN, Ulrich, D-63820 Elsenfeld (DE); KRÄMER, Wilhelm, D-63868 Grosswallstadt (DE)
(74) Vertreter: Fett, Günter
(86) Internationale Anmeldenummer: EP9704242
(87) Internationale Veröffentlichungsnummer: WO9806754

(56) Entgegenhaltungen:
- EP-A- 0 648 808
- US-A- 4 255 300
- US-A- 4 426 228

## Beschreibung

Die Erfindung betrifft ein Verfahren zur Herstellung cellulosischer Formkörper durch Extrudieren und Koagulieren einer formbaren Lösung von Zellstoff in einem tertiären Aminoxid und ggf. einer Zellstoff nichtlösenden Flüssigkeit, die mit dem tertiären Aminoxid mischbar ist, zu Formkörpern, bei dem zur Herstellung der formbaren Lösung ein erster Zellstoff mit höherem Polymerisationsgrad und ein zweiter Zellstoff mit niedrigerem Polymerisationsgrad eingesetzt werden.

EP-A-0 648 808 offenbart eine formbare Celluloselösung aus Zellstoff in dem tertiären Aminoxid N-Methylmorpholin-N-Oxid (NMMO) und einer Zellstoff nichtlösenden Flüssigkeit, die mit dem tertiären Aminoxid mischbar ist, wie Wasser. Als Zellstoff wird eine Mischung von zwei Zellstoffen eingesetzt, wobei der erste Zellstoff einen Polymerisationsgrad, im folgenden als DP abgekürzt, von 500 bis 2000 aufweist und der zweite Zellstoff einen DP von 90% oder weniger des DP des ersten Zellstoffs aufweist und im Bereich von 350 bis 900 liegt. Das Mischungsverhältnis bezogen auf das Gewicht des ersten zum zweiten Zellstoff beträgt 95:5 bis 50:50.

Aus dieser Celluloselösung werden cellulosische Formkörper hergestellt, wobei eine hohe Geschwindigkeit bei einer Prozeßstabilität angestrebt wird, die nicht zu einer Verschlechterung der mechanischen Eigenschaften der cellulosischen Formkörper führt.

Lösungen von Zellstoff in dem tertiären Aminoxid NMMO sind in der Regel nicht wasserfrei. Um eine formbare Lösung von Zellstoff in NMMO und Wasser herzustellen, müssen die Konzentrationen der dreiphasigen Lösung, d.h. Zellstoff, NMMO und Wasser, so eingestellt werden, daß sie jeweils in vorbestimmten Bereichen, dem sogenannten Lösungsgebiet in einem ternären Diagramm (siehe dazu beispielsweise W094/28212), liegen.

EP-A-0 553 070 offenbart tertiäre Aminoxide, die zur Herstellung form- bzw. spinnbarer cellulosischer Lösungen verwendet werden können, und die die Herstellung von praktisch wasserfreien Celluloselösungen gestatten. Während Lösungen von Zellstoff in NMMO bei einer Zellstoffkonzentration von beispielsweise 12 Gew.% und 77,5 Gew.% NMMO einen Wassergehalt von 10,5 Gew.% aufweisen, kann eine Lösung von Cellulose in tertiären Aminoxiden gemäß der EP-A-0 553 070 wasserfrei sein oder einen sehr geringen Wassergehalt aufweisen.

Bei der Herstellung von cellulosischen Lösungen in NMMO und Wasser geht man üblicherweise so vor, daß zunächst ein Vorgemisch, auch Suspension genannt, hergestellt wird, in dem Wasser in einem solchen Überschuß vorliegt, daß der Zellstoff nicht in NMMO gelöst wird. Dieser Suspension wird unter erhöhter Temperatur und reduziertem Druck, beispielsweise in einem Extruder, Dünnschichtverdampfer oder evakuierbaren Mixer oder Kneter, soviel Wasser entzogen, bis das Lösungsgebiet erreicht wird. Diese Lösung wird dann zu den gewünschten Formkörpern geformt, beispielsweise zu Fasern, Filamenten oder Hohlfasern in einer Spinndüse versponnen oder zu Folien oder Membranen extrudiert und über einen Luftspalt in ein Fällbad zur Koagulation der Cellulose geleitet. Nach der Koagulation werden die Formkörper in Waschbädern gewaschen, um NMMO zu entfernen, und anschließend getrocknet.

Ein derartiges Verfahren wird auch zur Herstellung der Celluloselösung gemäß der EP-A-0 648 808 eingesetzt, wobei allerdings bei der Herstellung der Suspension nicht nur ein Zellstoff eingesetzt wird, sondern zunächst zwei Zellstoffe mit unterschiedlichem DP miteinander gemischt werden, bevor sie mit NMMO und Wasser in Kontakt gebracht werden, um die Suspension herzustellen.

Die in EP-A-0 648 808 offenbarte Celluloselösung gestattet die Herstellung von cellulosischen Fasern mit hoher Spinngeschwindigkeit und deren mechanischen Eigenschaften, wie Festigkeit und Bruchdehnung, entsprechen denen von Fasern, die aus einer Lösung von nur einem Zellstoff hergestellt wurden.

Es hat sich aber gezeigt, daß das in der EP-A-0 648 808 angewandte Verfahren zur Herstellung der Celluloselösung, bei dem zunächst die Zellstoffe mit unterschiedlichem DP gemischt werden, bei Verwendung von Zellstoffen, von denen einer einen sehr hohen DP - wie beispielsweise 7000 - aufweist, zu Schwierigkeiten führen kann und keine Celluloselösung mit guter Formbarkeit erzielt wird.

Aufgabe der vorliegenden Erfindung ist daher, ein eingangs genanntes Verfahren zur Herstellung von cellulosischen Formkörpern zur Verfügung zu stellen, das ein weiteres Herstellungsverfahren für die Lösungsherstellung umfaßt und das darüberhinaus auch die Mitverwendung von einem Zellstoff mit sehr hohem DP gestattet.

Diese Aufgabe wird bei dem genannten Verfahren dadurch gelöst, daß zunächst eine Lösung des ersten Zellstoffs mit höherem Polymerisationsgrad in dem tertiären Aminoxid und ggf. nichtlösender Flüssigkeit und eine Zusammensetzung aus dem zweiten Zellstoff mit niedrigerem Polymerisationsgrad, tertiärem Aminoxid und ggf. nichtlösender Flüssigkeit separat hergestellt werden und anschließend die Lösung und die Zusammensetzung zum Erreichen der formbaren Lösung zumindest gemischt werden.

Als Zusammensetzung aus dem zweiten Zellstoff mit niedrigerem DP kann eine Lösung des zweiten Zellstoffs in dem tertiären Aminoxid und ggf. nichtlösender Flüssigkeit eingesetzt werden. Als tertiäres Aminoxid wird bevorzugt NMMO eingesetzt und als Zellstoff nichtlösende Flüssigkeit, die mit dem tertiären Aminoxid mischbar ist, Wasser. Bei dieser Ausgestaltung des erfindungsgemäßen Verfahrens werden also zwei Lösungen aus Zellstoffen mit unterschiedlichem DP separat hergestellt und diese miteinander gemischt, um anschließend zu Formkörpern geformt zu werden.

Die bei dieser Ausführungsform des erfindungsgemäßen Verfahrens miteinander zu mischenden Lösungen können so beschaffen sein, daß sie bereits den für die jeweilige Lösung optimalen Wassergehalt aufweisen, bevor sie gemischt werden. Bevorzugt wird allerdings eine Ausgestaltung, bei der nur die Lösung aus dem Zellstoff mit höherem DP bereits den optimalen Wassergehalt aufweist, und die Lösung aus dem Zellstoff mit niedrigerem DP einen Wasseranteil aufweist, der so bemessen ist, daß der Zellstoff zwar in gelöster Form vorliegt (in dem ternären Diagramm das Lösungsgebiet also schon erreicht ist), wobei der Wassergehalt aber noch geringfügig größer ist, als der für die jeweilige Cellulosekonzentration bevorzugt anzustrebende Wassergehalt. Diese beiden Lösungen werden beispielsweise in einem evakuierbaren Kneter, Mischer oder Extruder miteinander gemischt, und es wird der Wassergehalt dabei noch geringfügig vermindert, bis der für die formbare Lösung optimale Wassergehalt erreicht wird. Durch das Mischen der beiden Lösungen unter reduziertem Druck zur Reduzierung des Wassergehalts wird gleichzeitig eine Entgasung der formbaren Lösung erzielt.

Alternativ kann die Zusammensetzung aus dem zweiten Zellstoff mit niedrigerem DP eine Suspension sein, in der Wasser in Überschuß vorliegt, und der Zellstoff in dem tertiären Aminoxid nicht gelöst ist. Das Mischen der Lösung und der Suspension kann beispielsweise in einem evakuierbaren Kneter, Extruder oder Dünnschichtverdampfer erfolgen. Um ausgehend von der Mischung der Lösung und der Suspension zu einer formbaren Lösung zu gelangen, wird der Mischung unter reduziertem Druck und erhöhter Temperatur das überschüssige Wasser entzogen bis der entsprechend der Gesamtzellstoffkonzentration der formbaren Lösung optimale Wassergehalt erreicht wird.

Die Lösung aus dem ersten Zellstoff mit höherem DP kann auch zunächst abgekühlt und gemahlen werden und in gemahlener Form mit der Lösung oder der Suspension aus dem zweiten Zellstoff mit niedrigerem DP gemischt werden.

Es können auch weitere Lösungen oder Suspensionen aus Zellstoff in tertiärem Aminoxid mit der Lösung aus dem ersten Zellstoff und der Lösung oder der Suspension aus dem zweiten Zellstoff gemischt werden. Um den Celluloseabbau zu verringern, können die Lösung aus dem ersten Zellstoff und/oder die Zusammensetzung aus dem zweiten Zellstoff einen Stabilisator, wie Gallussäurepropylester, enthalten.

Der DP des ersten Zellstoffs ist bevorzugt größer als 2000, bevorzugt größer als 5000. Der zweite Zellstoff weist bevorzugt einen DP kleiner als 1000 auf. Es ist auch möglich, für den ersten Zellstoff mit höherem DP und/oder für den zweiten Zellstoff mit niedrigerem DP eine Mischung von Zellstoffen einzusetzen. Bei Verwendung einer Mischung von Zellstoffen, beispielsweise für den zweiten Zellstoff, sollten deren DPs und deren gewichtsmäßige Anteile allerdings so ausgelegt sein, daß die resultierende DP-Verteilung ihren Schwerpunkt in dem o.g. Bereich für den DP des zweiten Zellstoffs aufweist.

Die Gesamtzellstoffkonzentration der formbaren Lösung sollte 8 bis 18 Gew.%, vorzugsweise 11 bis 14 Gew.% betragen. Die Lösung aus dem ersten Zellstoff mit hohem DP weist eine Zellstoffkonzentration von 1 bis 10 Gew.%, vorzugsweise 2 bis 7 Gew.% auf. Die Konzentration der Lösung aus dem ersten Zellstoff sollte die Höhe des DP des zur Lösungsherstellung eingesetzten Zellstoffs berücksichtigen. Bei einem DP von 7000 beträgt die Zellstoffkonzentration bevorzugt etwa 3 Gew.%, und bei einem DP des Zellstoffs in der Größenordnung von etwa 2000 beträgt die Zellstoffkonzentration bevorzugt etwa 6 Gew.%.

Die Lösung aus dem ersten Zellstoff und die Zusammensetzung aus dem zweiten Zellstoff sollten in einem Verhältnis miteinander gemischt werden, daß der Anteil am ersten Zellstoff 2 bis 20% und der Anteil am zweiten Zellstoff 98 bis 80% der Gesamtzellstoffkonzentration der formbaren Lösung beträgt.

Mit dem erfindungsgemäßen Verfahren wird gegenüber dem in EP-A-0 648 808 angewandten, üblichen Verfahren ein weiteres Verfahren zur Herstellung von formbaren Zellstofflösungen zur Verfügung gestellt, bei dem Zellstoffe mit unterschiedlichen DPs eingesetzt werden. Das Mischen eines Zellstoffs mit höherem DP mit einem mit niedrigerem DP vor der Herstellung der Suspension ist für Zellstoffe, deren DP in der Größenordnung von 350 bis 2000 liegt, relativ unproblematisch. Versuche haben aber gezeigt, daß, falls einer der Zellstoffe einen sehr hohen DP aufweist, wie beispielsweise in der Größenordnung von 7000, die Lösungsherstellung aus den vorab gemischten Zellstoffen problematisch ist. So wurde bei Einsatz eines evakuierbaren Kneters zur Lösungsherstellung keine formbare Lösung erreicht. Ausgehend von einer Mischung von Zellstoffen mit einem DP von 650 und einem DP von 7000 konnte in einem Extruder zwar eine Lösung hergestellt werden, die allerdings - wie optische und rheologische Untersuchungen gezeigt haben -gelig war, was insbesondere bei der Herstellung von Fasern und Filamenten negative Auswirkungen auf die Spinnbarkeit der Lösung und die Spinnstabilität zur Folge hat.

Der Einsatz von Zellstoffen mit hohem DP zur Lösungsherstellung ist wünschenswert, da daraus hergestellte Fasern und Filamente üblicherweise eine hohe Festigkeit aufweisen. Nachteilig ist jedoch, daß Zellstoffe mit hohem DP zu einer hohen Lösungsviskosität führen, und daher die Zellstoffkonzentration niedrig gehalten werden muß. Entsprechend hoch ist somit die NMMO-Konzentration der Lösung. NMMO wird in den Waschbädern aus den Formkörpern ausgewaschen und wird anschließend erneut zur Herstellung von Suspensionen eingesetzt. Der Einsatz großer Mengen NMMO verursacht daher einen größeren Rückgewinnungsaufwand und ist in Hinblick auf eine kostengünstige Prozeßführung nachteilig.

Das erfindungsgemäße Verfahren gestattet aber nicht nur die Verwendung von Zellstoffen mit sehr hohem DP. Überraschend wurde gefunden, das mit ihm durch das Mischen der Lösung aus Zellstoff mit sehr hohem DP mit der Suspension oder Lösung aus dem Zellstoff mit niedrigerem DP, cellulosische Filamente hergestellt werden können, die eine ausreichende Festigkeit aufweisen und im Vergleich zu Filamenten, die nur aus dem Zellstoff mit niedrigerem DP hergestellt wurden, eine wesentlich höhere Bruchdehnung und verringerte Neigung zur Fibrillierung aufweisen. Da bevorzugt nur geringe Mengen der Lösung aus dem Zellstoff mit hohem DP eingesetzt werden, ist das Verfahren insgesamt auch kostengünstiger als ein Verfahren, bei dem - wie oben ausgeführt - nur ein Zellstoff mit hohem DP eingesetzt wird.

### Naßscheuertestapparatur

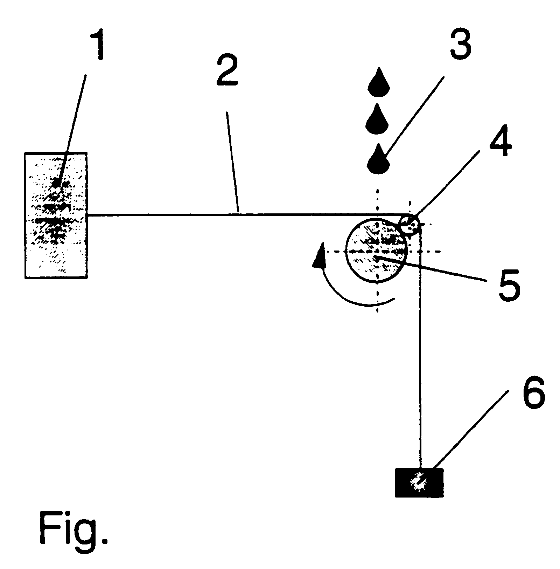

Zur Messung der Fibrillierungsneigung cellulosischer Filamente dient die in der Figur schematisch dargestellte Naßscheuertestapparatur. Die Naßscheuertestapparatur besteht im wesentlichen aus den mit den Bezugsziffern 1 bis 6 bezeichneten Elementen, die im folgenden näher beschrieben werden. 50 Filamente werden als Filamentbündel 2 in einem PVC-Block 1 fixiert. Die Scheuerbelastung wird dadurch erzeugt, daß das Filamentbündel 2 über einen rotierenden Glasstab 5 mit 6 mm Durchmesser geführt wird, an dem ein Keramikstab 4 mit 2,5 mm Durchmesser befestigt ist. Der Glasstab 5 ist in einem Abstand von 80 mm zu dem PVC-Block 1 angeordnet. Der Glasstab 5 und mit ihm der Keramikstab 4 rotieren mit einer Geschwindigkeit von 25 Umdrehungen pro Minute. Durch Betropfen mit Wasser 3 wird das durch ein Gewicht 6 von 3 g gestraffte Filamentbündel 2 naß gehalten. Der Naßscheuertest wurde bei den nachfolgenden Beispielen bis zum Durchriß des Filamentbündels 2 durchgeführt und die Zeit von Beginn des Tests bis zum Durchriß gemessen. Die gemessene Zeit stellt ein Maß für die Fibrillierungsneigung der Filamente dar. Je länger die Zeit bis zum Durchriß ist, desto geringer ist die Neigung der Filamente zur Fibrillierung.

### Beispiele

Für die nachfolgend angeführten Beispiele wurde zunächst eine Lösung aus einem Zellstoff mit höherem DP in NMMO und Wasser hergestellt. Als Zellstoffe wurden dazu die Zellstoffe:
Z1: Linters HVE (Fa. Buckeye), DP 7000
Z2: Aliceta HD (Fa. Western), DP 2300
Z3: Viskokraft VHV (Fa. International Paper), DP 1800
eingesetzt.

Die Konzentration des Zellstoffs mit dem DP von 7000 (Z1) in der Lösung betrug jeweils 3 Gew.%. NMMO lag in 81,96 Gew.% vor, und der Wassergehalt betrug 15 Gew.%. Als Stabilisator enthielt die Lösung 0,04 Gew.% Gallussäurepropylester. Die Zellstoffkonzentration bei Verwendung des Zellstoffs Z2 (DP 2300) oder Z3 (DP 1800) in der Lösung betrug 6 Gew.%. Die NMMO-Konzentration betrug 79,96 Gew.% und der Wassergehalt 14 Gew.%. Auch diese Lösungen enthielten 0,04 Gew.% Gallussäurepropylester.

Für die Herstellung der Suspension oder Lösung aus dem Zellstoff mit niedrigerem DP wurde der Zellstoff:
Z4: Viskokraft ELV (Fa. International Paper), DP 650
eingesetzt.

Die DP-Werte aller eingesetzten Zellstoffe wurden mittels Viskosimetrie in Cuen bestimmt.

Aus den Zellstoffen mit niedrigerem DP wurden Suspensionen oder Lösungen in NMMO und Wasser hergestellt. Die Zellstoffkonzentration bei der Herstellung der Suspension oder Lösung aus dem Zellstoff mit niedrigerem DP wurde so bemessen, daß die durch Mischen mit der Lösung aus Zellstoff mit höherem DP hergestellte formbare Lösung einen Gesamtzellstoffgehalt von 11 bis 14 Gew.% aufwies. Beispielsweise wurde zur Herstellung einer formbaren Lösung mit einer Gesamtzellstoffkonzentration von 12 Gew.%, 77,88 Gew.% NMMO, 10 Gew.% Wasser und 0,12 Gew.% Gallussäurepropylester, deren Zellstoffanteil zu 10% von der 3 Gew.%-igen Lösung aus dem Zellstoff mit einem DP von 7000 gebildet wurde und zu 90% von einer Lösung aus dem Zellstoff mit einem DP von 650 gebildet wurde, als Lösung aus dem Zellstoff mit dem DP von 650 eine mit einer Zellstoffkonzentration von 17,1 Gew.% in 72,73 Gew.% NMMO und 10 Gew.% Wasser sowie 0,17 Gew.% Gallussäurepropylester eingesetzt.

Die Lösung aus dem Zellstoff mit hohem DP wurde in gemahlener Form mit einer Lösung oder einer Suspension des Zellstoffs mit niedrigerem DP in einem Kneter gemischt und überschüssiges Wasser wurde aus der Mischung bis zum Erreichen einer formbaren Lösung entfernt. Derart hergestellte formbare Lösungen wurden jeweils zu einem Einzelfilament mit einer Spinngeschwindigkeit von 48 m/min versponnen und in einem Wasserbad koaguliert. Anschließend wurden die Einzelfilamente gewaschen und getrocknet. Die Bestimmung der Festigkeit und der Bruchdehnung erfolgte jeweils am Einzelfilament. Der Titer der Filamente betrug 1,7 dtex.

In den nachfolgenden Tabellen sind jeweils für die verwendeten Zellstoffe - repräsentiert durch ihren DP - die Zellstoffanteile in % bezogen auf den Gesamtzellstoffgehalt der formbaren Lösung und die Gesamtzellstoffkonzentration C in Gew.% der formbaren Lösung angegeben. Weiterhin sind die Festigkeit F in cN/tex und die Bruchdehnung BD in % der Filamente und die bei dem Naßscheuertest gemessene Zeit t in min bis zum Durchriß des Filamentbündels aufgeführt.

In Tabelle 1 sind entsprechende Daten aufgeführt, die an Filamenten gemessen wurde, zu deren Herstellung eine Lösung aus einem Zellstoff mit höherem DP und eine Suspension aus einem Zellstoff mit niedrigerem DP gemischt wurden.

**Tabelle 1:**

| **Nr.** | **7000** | **2300** | **1800** | **650** | **C/Gew.%** | **F/(cN/tex)** | **BD/%** | **t/min** |
|---|---|---|---|---|---|---|---|---|
| 1 | 10,0 | | | 90,0 | 13 | 39,8 | 15,1 | 24 |
| 2 | 10,0 | | | 90,0 | 12 | 36,4 | 15,4 | 23 |
| 3 | 10,0 | | | 90,0 | 11 | 34,2 | 16,1 | 27 |
| 4 | 5,0 | | | 95,0 | 12 | 35,9 | 16,0 | 25 |
| 5 | 2,5 | | | 97,5 | 12 | 36,5 | 17,1 | 20 |
| 6 | 7,9 | | | 92,1 | 11 | 33,1 | 16,2 | 24 |
| 7 | | 10,0 | | 90,0 | 13 | 36,4 | 14,6 | 21 |
| 8 | | 10,0 | | 90,0 | 12 | 35,1 | 15,4 | 25 |
| 9 | | 10,0 | | 90,0 | 11 | 33,0 | 14,3 | 28 |
| 10 | | 5,0 | | 95,0 | 12 | 32,5 | 13,0 | 24 |
| 11 | | 2,5 | | 97,5 | 12 | 37,2 | 12,9 | 20 |
| 12 | | | 10,0 | 90,0 | 12 | 38,6 | 14,0 | 22 |

Tabelle 2 zeigt entsprechende Daten, die an Filamenten gemessen wurde, zu deren Herstellung eine Lösung aus einem Zellstoff mit höherem DP und eine Lösung aus einem Zellstoff mit niedrigerem DP gemischt wurden.

**Tabelle 2:**

| **Nr.** | **7000** | **2300** | **1800** | **650** | **C/Gew.%** | **F/(cN/tex)** | **BD/%** | **t/min** |
|---|---|---|---|---|---|---|---|---|
| 13 | 2,3 | | | 97,7 | 13 | 34,9 | 12,9 | 25 |
| 14 | 8,4 | | | 91,6 | 11 | 31,2 | 16,1 | 36 |
| 15 | 10,3 | | | 89,7 | 12 | 33,6 | 13,7 | 31 |
| 16 | 2,6 | | | 97,4 | 14 | 37,5 | 17,6 | 22 |
| 17 | 6,6 | | | 93,4 | 14 | 37,1 | 15,8 | 24 |
| 18 | 10,1 | | | 89,9 | 14 | 38,3 | 14,5 | 24 |
| 19 | 10,0 | | | 90,0 | 12 | 39,3 | 13,6 | 31 |
| 20 | 5,0 | | | 95,0 | 12 | 32,5 | 16,1 | 28 |
| 21 | 2,5 | | | 97,5 | 12 | 34,3 | 17,0 | 25 |
| 22 | | 10,0 | | 90,0 | 12 | 38,0 | 15,7 | 30 |
| 23 | | | 10,0 | 90,0 | 12 | 38,7 | 14,5 | 21 |

Anhand der in den Tabellen 1 und 2 angegebenen Beispiele wird deutlich, daß erfindungsgemäß hergestellte Filamente eine Festigkeit zwischen etwa 31 und 40 cN/tex aufweisen. Sie zeichnen sich durch eine hohe Bruchdehnung im Bereich von 13 bis 17% aus, was insbesondere für textile Anwendungen wünschenswert ist.

Als Vergleichsbeispiele wurden Filamente aus einer Lösung hergestellt, zu deren Herstellung nur ein Zellstoff eingesetzt wurde (Beispiele 24 bis 26). Tabelle 3 zeigt die textilen Daten der gemäß den Vergleichsbeispielen hergestellten Filamente.

**Tabelle 3:**

| **Nr.** | **7000** | **2300** | **1800** | **650** | **C/Gew.%** | **F/(cN/tex)** | **BD/%** | **t/min** |
|---|---|---|---|---|---|---|---|---|
| 24 | | | | 100 | 14 | 36,9 | 11,2 | 17 |
| 25 | | | | 100 | 12 | 34,0 | 11,9 | 18 |
| 26 | 100 | | | | 3 | 53,5 | 9,5 | 37 |
| 27 | | | 20 | 80 | 14 | 39,4 | 12,9 | 15 |

Für die Beispiele 24 und 25 wurde zur Lösungsherstellung der Zellstoff mit einem DP von 650 eingesetzt. Zwar entspricht die Festigkeit dieser Filamente denen der erfindungsgemäß hergestellten Filamente, ihre Bruchdehnung ist allerdings niedriger. Insbesondere ist die beim Naßscheuertest ermittelte Reißzeit für die erfindungsgemäß hergestellten Filamente deutlich höher und damit deren Neigung zur Fibrillierung geringer als der gemäß den Vergleichsbeispielen 24 und 25 hergestellten Filamente.

Für das Vergleichsbeispiel 26 wurde zur Lösungsherstellung der Zellstoff mit einem DP von 7000 eingesetzt. Die daraus hergestellten Filamente verfügen zwar über eine sehr hohe Festigkeit und geringe Neigung zur Fibrillierung, weisen aber eine geringere Bruchdehnung auf. Um eine formbare Lösung zu erhalten, konnte allerdings nur mit einer extrem niedrigen Zellstoffkonzentration gearbeitet werden, wodurch - wie oben ausgeführt - die Herstellung der Filamente unwirtschaftlich ist.

Beim Vergleichsbeispiel 27 wurden zur Lösungsherstellung zwei Zellstoffe mit unterschiedlichem DP - und zwar 650 und 1800 - eingesetzt. Im Unterschied zum erfindungsgemäßen Verfahren wurden allerdings direkt die Zellstoffe gemischt, bevor sie zur Herstellung der Suspension mit NMMO und Wasser in Kontakt gebracht wurden. Ausgehend von dieser Zellstoffmischung hergestellte Filamente weisen gegenüber den in den Vergleichsbeispielen 24 bis 26 angegebenen Filamenten zwar eine höhere Bruchdehnung auf, neigen allerdings in noch stärkerem Maße zur Fibrillierung. Verarbeitet man diese beiden Zellstoffe gemäß dem erfindungsgemäßen Verfahren (Beispiel Nr. 14, Tabelle 1 und Beispiel Nr. 23, Tabelle 2) resultiert neben einer Erhöhung der Bruchdehnung auch eine Herabsetzung der Neigung zur Fibrillierung.

## Patentansprüche

1. Verfahren zur Herstellung cellulosischer Formkörper durch Extrudieren und Koagulieren einer formbaren Lösung von Zellstoff in einem tertiären Aminoxid und ggf. einer Zellstoff nichtlösenden Flüssigkeit, die mit dem tertiären Aminoxid mischbar ist, zu Formkörpern, bei dem zur Herstellung der formbaren Lösung ein erster Zellstoff mit höherem Polymerisationsgrad und ein zweiter Zellstoff mit niedrigerem Polymerisationsgrad eingesetzt werden, dadurch gekennzeichnet, daß zunächst eine Lösung des ersten Zellstoffs mit höherem Polymerisationsgrad in dem tertiären Aminoxid und ggf. nichtlösender Flüssigkeit und eine Zusammensetzung aus dem zweiten Zellstoff mit niedrigerem Polymerisationsgrad, tertiärem Aminoxid und ggf. nichtlösender Flüssigkeit separat hergestellt werden und anschließend die Lösung und die Zusammensetzung zum Erreichen der formbaren Lösung zumindest gemischt werden.

2. Verfahren nach Anspruch 1, dadurch gekennzeichnet, daß als Zusammensetzung aus dem zweiten Zellstoff eine Lösung des zweiten Zellstoffs in dem tertiären Aminoxid und ggf. nichtlösender Flüssigkeit eingesetzt wird.

3. Verfahren nach Anspruch 1, dadurch gekennzeichnet, daß als Zusammensetzung aus dem zweiten Zellstoff eine Suspension des zweiten Zellstoffs in dem tertiären Aminoxid und nichtlösender Flüssigkeit eingesetzt wird.

4. Verfahren nach Anspruch 1 und 3, dadurch gekennzeichnet, daß die Lösung des ersten Zellstoffs und die Suspension des zweiten Zellstoffs zu einer Mischung verarbeitet werden und zum Erreichen der formbaren Lösung aus der Mischung überschüssige nichtlösende Flüssigkeit entfernt wird.

5. Verfahren nach einem oder mehreren der Ansprüche 1 bis 4, dadurch gekennzeichnet, daß die Lösung aus dem ersten Zellstoff abgekühlt und gemahlen wird und in gemahlener Form mit der Zusammensetzung gemischt wird.

6. Verfahren nach einem oder mehreren der Ansprüche 1 bis 5, dadurch gekennzeichnet, daß als erster Zellstoff ein Zellstoff mit einem Polymerisationsgrad größer als 2000, bevorzugt größer als 5000, eingesetzt wird.

7. Verfahren nach einem oder mehreren der Ansprüche 1 bis 5, dadurch gekennzeichnet, daß als zweiter Zellstoff ein Zellstoff mit einem Polymerisationsgrad kleiner als 1000 eingesetzt wird.

8. Verfahren nach einem oder mehreren der Ansprüche 1 bis 7, dadurch gekennzeichnet, daß für den ersten Zellstoff mit höherem DP und/oder für den Zellstoff mit niedrigerem DP Zellstoffmischungen eingesetzt werden.

9. Verfahren nach einem oder mehreren der Ansprüche 1 bis 8, dadurch gekennzeichnet, daß die Lösung aus dem ersten Zellstoff eine Zellstoffkonzentration von 1 bis 10 Gew.%, vorzugsweise 2 bis 7 Gew.% aufweist.

10. Verfahren nach einem oder mehreren der Ansprüche 1 bis 9, dadurch gekennzeichnet, daß die formbare Lösung eine Gesamtzellstoffkonzentration von 8 bis 18 Gew.%, vorzugsweise 11 bis 14 Gew.% aufweist.

11. Verfahren nach einem oder mehreren der Ansprüche 1 bis 10, dadurch gekennzeichnet, daß die Lösung aus dem ersten Zellstoff und die Zusammensetzung aus dem zweiten Zellstoff so gemischt werden, daß der Anteil am ersten Zellstoff 2 bis 20% und der Anteil am zweiten Zellstoff 98 bis 80% der Gesamtzellstoffkonzentration der formbaren Lösung beträgt.

12. Verfahren nach einem oder mehreren der Ansprüche 1 bis 11, dadurch gekennzeichnet, daß weitere Zusammensetzungen und/oder Lösungen hergestellt und mit der Lösung aus dem ersten Zellstoff und der Zusammensetzung aus dem zweiten Zellstoff zum Erreichen der formbaren Lösung zumindest gemischt werden.

13. Verfahren nach einem oder mehreren der Ansprüche 1 bis 12, dadurch gekennzeichnet, daß als tertiäres Aminoxid N-Methylmorpholin-N-Oxid eingesetzt wird.

14. Verfahren nach einem oder mehreren der Ansprüche 1 bis 13, dadurch gekennzeichnet, daß die Zellstoff nichtlösende Flüssigkeit, die mit dem tertiären Aminoxid mischbar ist, Wasser ist.

15. Verfahren nach einem oder mehreren der Ansprüche 1 bis 14, dadurch gekennzeichnet, daß die Lösung aus dem ersten Zellstoff und/oder die Zusammensetzung aus dem zweiten Zellstoff zusätzlich einen Stabilisator enthalten.

## Claims

1. Process for producing cellulosic shaped objects by extruding and coagulating a solution of chemical wood pulp in a tertiary amine oxide, and possibly a liquid that does not dissolve wood pulp and is miscible with the tertiary amine oxide, the solution capable of being shaped into objects, the process of producing the shapeable solution employing a first wood pulp with a higher degree of polymerization and a second wood pulp with a lower degree of polymerization, characterized in that initially a solution of the first wood pulp with a higher degree of polymerization in the tertiary amine oxide and possibly non-dissolving liquid, and a composition containing the second wood pulp with the lower degree of polymerization, tertiary amine oxide, and possibly non-dissolving liquid, are prepared separately, and the solution and composition are subsequently at least mixed to obtain the shapeable solution.

2. Process according to Claim 1, characterized in that a solution of the second wood pulp in the tertiary amine oxide and possibly non-dissolving liquid is used as the composition containing the second wood pulp.

3. Process according to Claim 1, characterized in that a suspension of the second wood pulp in the tertiary amine oxide and non-dissolving liquid is used as the composition containing the second wood pulp.

4. Process according to Claims 1 and 3, characterized in that the solution of the first wood pulp and the suspension of the second wood pulp are processed to form a mixture and excess non-dissolving liquid is removed from the mixture to obtain the shapeable solution.

5. Process according to one or more of Claims 1 to 4, characterized in that the solution of the first wood pulp is cooled, ground, and mixed in ground form with the composition.

6. Process according to one or more of Claims 1 to 5, characterized in that a wood pulp with a degree of polymerization higher than 2000, preferably higher than 5000, is used as the first wood pulp.

7. Process according to one or more of Claims 1 to 5, characterized in that a wood pulp with a degree of polymerization lower than 1000 is used as the second wood pulp.

8. Process according to one or more of Claims 1 to 7, characterized in that wood pulp mixtures are used for the first wood pulp with higher DP and/or the wood pulp with the lower DP.

9. Process according to one or more of Claims 1 to 8, characterized in that the solution of the first wood pulp has a concentration of 1 to 10% by weight, preferably 2 to 7% by weight.

10. Process according to one or more of Claims 1 to 9, characterized in that the shapeable solution has a total wood pulp concentration of 8 to 18% by weight, preferably 11 to 14% by weight.

11. Process according to one or more of Claims 1 to 10, characterized in that the solution of the first wood pulp and the composition containing the second wood pulp are mixed such that the fraction of the first wood pulp is 2 to 20% and the fraction of the second wood pulp is 98 to 80% of the total wood pulp concentration of the shapeable solution.

12. Process according to one or more of Claims 1 to 11, characterized in that additional compositions and/or solutions are prepared and at least mixed with the solution of the first wood pulp and the composition containing the second wood pulp to obtain the shapeable solution.

13. Process according to one or more of Claims 1 to 12, characterized in that N-methylmorpholine-N-oxide is used as the tertiary amine oxide.

14. Process according to one or more of Claims 1 to 13, characterized in that the liquid not dissolving the wood pulp and miscible with the tertiary amine oxide is water.

15. Process according to one or more of Claims 1 to 14, characterized in that the solution containing the first wood pulp and/or the composition containing the second wood pulp additionally contains a stabilizer.

## Revendications

1. Procédé de fabrication d'articles formés cellulosiques, par extrusion et coagulation d'une solution plastique de cellulose dans un N-oxyde d'amine tertiaire contenant éventuellement un liquide non solvant de la cellulose et miscible avec le N-oxyde d'amine tertiaire, donnant des articles formés, procédé dans lequel on utilise pour la préparation de la solution plastique une première cellulose de degré de polymérisation élevé et une deuxième cellulose de faible degré de polymérisation, caractérisé par le fait que l'on prépare d'abord séparémment une solution de la première cellulose ayant un degré de polymérisation élevé dans le N-oxyde d'amine tertiaire contenant éventuellement un liquide non solvant, et une composition contenant la deuxième cellulose de faible degré de polymérisation, un N-oxyde d'amine tertiaire et éventuellement un liquide non solvant, et que l'on procède ensuite au moins au mélange de la solution et de la composition de manière à obtenir la solution plastique.

2. Procédé selon la revendication 1, caractérisé par le fait que l'on utilise, comme composition contenant la deuxième cellulose, une solution de la deuxième cellulose dans le N-oxyde d'amine tertiaire contenant éventuellement un liquide non solvant.

3. Procédé selon la revendication 1, caractérisé par le fait que l'on utilise comme composition contenant la deuxième cellulose, une suspension de la deuxième cellulose dans le N-oxyde d'amine tertiaire contenant du liquide non solvant.

4. Procédé selon la revendication 1 et 3, caractérisé par le fait que l'on prépare un mélange à partir de la solution contenant la première cellulose et de la suspension contenant la deuxième cellulose et que l'on élimine du mélange l'excès de liquide non solvant pour obtenir la solution plastique.

5. Procédé selon une ou plusieurs des revendications 1 à 4, caractérisé par le fait que la solution contenant la première cellulose est refroidie et broyée et que la solution broyée est mélangée avec la composition.

6. Procédé selon une ou plusieurs des revendications 1 à 5, caractérisée par le fait que l'on utilise comme première cellulose une cellulose ayant un degré de polymérisation supérieur à 2000, de préférence supérieur à 5000.

7. Procédé selon une ou plusieurs des revendications 1 à 5, caractérisé par le fait que l'on utilise comme deuxième cellulose une cellulose ayant un degré de polymérisation inférieur à 1000.

8. Procédé selon une ou plusieurs des revendications 1 à 7, caractérisé par le fait que l'on utilise comme première cellulose ayant un degré de polymérisation élevé et/ou comme deuxième celluose ayant un faible degré de polymérisation des mélanges de cellulose.

9. Procédé selon une ou plusieurs des revendications 1 à 8, caractérisé par le fait que la solution contenant la première cellulose présente une concentration en cellulose comprise entre 1 et 10 % en poids, de préférence entre 2 et 7 % en poids.

10. Procédé selon une ou plusieurs des revendications 1 à 9, caractérisé par le fait que la solution plastique a une concentration totale en cellulose comprise entre 8 et 18 % en poids, de préférence entre 11 et 14 % en poids.

11. Procédé selon une ou plusieurs des revendications 1 à 10, caractérisé par le fait que la solution contenant la première cellulose et la composition contenant la deuxième cellulose sont mélangées d'une manière telle que la fraction de la première cellulose est comprise entre 2 et 20 % et la fraction de la deuxième cellulose est comprise entre 98 et 80 % de la concentration totale de cellulose dans la solution plastique.

12. Procédé selon une ou plusieurs des revendications 1 à 11, caractérisé par le fait que l'on prépare d'autres compositions et/ou solutions et qu'on procède au moins au mélange de ces compositions et/ou solutions avec la solution contenant la première cellulose et avec la composition contenant la deuxième cellulose de manière à obtenir la solution plastique.

13. Procédé selon une ou plusieurs des revendications 1 à 12, caractérisé par le fait que l'on utilise comme N-oxyde d'amine tertiaire le N-oxyde de N-méthyl-morpholine.

14. Procédé selon une ou plusieurs des revendications 1 à 13, caractérisé par le fait que le liquide non solvant de cellulose, miscible avec le N-oxyde d'amine tertiaire est l'eau.

15. Procédé selon une ou plusieurs des revendications 1 à 14, caractérisé par le fait que la solution contenant la première cellulose et/u la composition contenant la deuxième cellulose contient en outre un agent de stabilisation.
